# EUROPEAN PATENT APPLICATION

(11) **EP 2 437 382 A1**
(43) Date of publication of application: **04.04.2012**
(21) Application number: 10183849.8
(22) Date of filing: 30.09.2010
(51) Int. Cl.: H02K 41/035, H02K 11/00

(54) **Electromagnetic motor**

(71) Applicant: Newson Engineering N.V., 9290 Overmere-Berlare (BE)
(72) Inventor: Van Biesen, Marc, 9280 Lebbeke (Wieze) (BE)
(74) Representative: Gyi, Jeffrey Ivan

(57) **Abstract**

The present invention relates to an electromagnetic motor for controlled linear displacement of an optical element along an axis of movement (A-A') comprising an armature provided with a mounting for the optical element; a stator provided with an opening in which the armature lies, and moves linearly along the axis (A-A'); wherein the armature further comprises a hollow inductive coil through which the mounting for the optical element is disposed; wherein the stator is provided with one or more permanent magnets polarized radially with respect to the axis (A-A'); and wherein the motor is configured for linear displacement of the armature relative to the stator responsive to an electrical signal provided to the coil.

## Description

### TECHNICAL FIELD

The present invention relates to an electromagnetic motor. In particular, the present invention relates to an electromagnetic motor for the controlled linear displacement of an optical element, particularly in the field of laser engraving.

### BACKGROUND TO THE INVENTION

Positioning a focused laser beam in a planar field is frequently required in industrial optical applications. A large number of laser-based marking systems and laser-based micro machining systems are installed worldwide. In most of those machines the laser beam is positioned on the work piece by means of a deflection system. This means that during processing the work piece is standing still while the laser beam is moving. The beam needs to be positioned in three dimensions: X, Y and Z. The Z movement is needed for keeping the laser light in focus while it moves over the work piece. This focusing can be achieved by a flat field objective mounted between XY-deflection system and the work piece or by a dynamically moving lens mounted between laser and XY-deflection system or a combination thereof.

Electromagnetic motors for the controlled displacement of optical elements such as mirrors or lenses are known in the art. In general, such motors comprise a displaceable armature in which the optical element is mounted and a stator which encloses the armature. Multiple paired permanent magnets and electromagnets are respectively mounted on the stator and armature or vice versa, whereby the permanent magnets and the electromagnets are aligned along the axis of movement of the armature. WO 2009/106094 discloses a device for positioning an optical element, comprising an armature with electromagnets, in particular electrically conductive coils which are placed around the geometrical center of the armature, and a stator with a base plate positioned below the armature. On the base plate are permanent magnets mounted below the center areas of the electrically conductive coils. US 2001/0000130 discloses a laser pointing apparatus for pointing a laser beam on a predetermined position, comprising a displaceable armature, holding a mirror in the XY plane, with outwardly extending arms on which coil type electromagnets are arranged. Permanent magnets are mounted on a base below the armature, facing the corresponding coil electromagnets, so as to generate a line of magnetic force in the Z axis direction.

Important aspects in determining the efficiency of electromagnetic motors for the controlled displacement of optical elements are the accuracy and response time of the motor. Currently known electromagnetic motors however, have several disadvantages in this respect. In particular, they are characterized by instability of the armature, thereby reducing the accuracy of the motor. Especially the needed high frequencies of movement and heavy accelerations, and herewith associated forces, cause bending of the armature. Moreover, in order to cope with instability problems, an increased robustness of in particular the armature results in a weight increase and as a corollary in a slower response time.

It is therefore an object of the present invention to provide an electromagnetic motor for the controlled displacement of an optical element that solves the above mentioned disadvantages. In particular, it is an object of the present invention to provide an electromagnetic motor which displays an increased stability and accuracy and which at the same time enables a fast response.

### Figure Legends

**FIG. 1** depicts a plan view of an electromagnetic motor **100** of the invention.
**FIG. 2** depicts a cross-sectional view of an electromagnetic motor **100** of the invention taken through a plane parallel to and coincident with the axis (**A-A'**) of movement.
**FIG. 3** depicts an electromagnetic motor **100** of the invention as shown in FIG. 2, in which two pairs of compliant members are indicated and two flanking planar supports.
**FIG. 4** depicts plan view of an embodiment of an electromagnetic motor **100** of the invention.
**FIG. 5** depicts a cross-sectional view of an electromagnetic motor of **FIG. 4**. taken through a plane parallel to and coincident with the axis (**A-A**') of movement.

### Summary

In an aspect, the present invention relates to an electromagnetic motor for controlled linear displacement of an optical element along an axis of movement (**A-'A**) comprising:
- an armature provided with a mounting for the optical element,
- a stator provided with a seat in which the armature lies, which seat is configured for linear movement of the armature along the axis (**A-A**'),
wherein
- the armature further comprises a hollow inductive coil through which the mounting for the optical element is disposed,
- the stator is provided with one or more permanent magnets polarized radially with respect to the axis (A-A')
- the motor is configured for linear displacement of the armature relative to the stator responsive to an electrical signal provided to the coil.

The inventors have surprisingly found that the electromagnetic motor as disclosed herein enables a faster and more accurate responsiveness to electromagnetic induction. Without wishing to be bound by theory, the inventors believe that by providing the optical element within the center of one inductive coil, thereby reducing the distance between the optical element and the coils, the forces are closer together, thereby reducing the stiffness requirements of the armature. In this way, stability and hence accuracy of the armature can be guaranteed without having to increase the robustness, and hence the weight of the armature, resulting in a light weight armature with a faster response time. A faster response time of the electromagnetic motor according to the invention allows for faster movement, in particular an increased movement frequency, and at the same time an increased stability allows for the electromagnetic motor according to the invention to cope with the forces associated with the acceleration due to movement, thereby increasing the accuracy.

In an embodiment, the electromagnetic motor according to the invention further comprises a class D amplifier, the output of which is connected to the coil. In a preferred embodiment, the class D amplifier is an H-bridged class D amplifier.

In an embodiment, the electromagnetic motor according to the invention further comprises at least three compliant members that provide a force to said armature to bias the armature in a neutral position, whereby the electrical signal provides a current-induced force that displaces the armature either side of the neutral position against the force of the compliant member. In a further embodiment, at least two of the compliant members - a first and second compliant member - are electrically conductive and electrically conductively isolated from each other, and adapted to provide current to the coil. The provision of current to the coils by means of the compliant members eliminates the need of additional electrical connections from a power supply to the coils, which may otherwise interfere with armature displacement during operation.

In an embodiment, the linear displacement of the optical element is restricted to a single axis of movement *i.e.* said axis (A-'A).

In yet another embodiment, the coil is made from conducting wire or strips.

In a further embodiment, the invention relates to an electromagnetic motor as described herein, further comprising at least one position sensor configured to measure the displacement of the armature relative to the stator. In a preferred embodiment, the number of position sensors is two, and they are diametrically opposed relative to the axis of movement. Diametrically opposed position sensors allow for a more accurate determination of the instantaneous position of the armature relative to the stator. Moreover, instability of the armature can be more readily detected by using two diametrically opposed position sensors by the detection of diverging readouts.

In a preferred embodiment, the invention relates to an electromagnetic motor as described herein, comprising an H-bridged class D amplifier which is connected to three electrically conductive compliant members, a first and a second of which are connected to the coil and a third of which is connected to a light source forming part of a position sensor which is mounted on the armature; wherein current is provided to the light source through the third compliant member, and a bridging connection between the first and second compliant members. The bridging connection preferably comprises a pair of resistors connected in series, wherein current is drawn from the connection between the resistors.

In an embodiment, the invention relates to an electromagnetic motor as disclosed herein, comprising one closed annular permanent magnet. In a further embodiment, two or more permanent magnets are symmetrically arranged or evenly distributed about the stator. In a further embodiment, the one or more magnets are arranged in a plane that is essentially parallel to and/or co-planar with the plane of the coil.

In an embodiment, the invention relates to an electromagnetic motor as disclosed herein, wherein the optical element is a lens.

In another aspect, the invention also relates to a method for adjusting the focal plane of a laser beam, comprising transmitting said laser beam through a lens of the electromagnetic motor as disclosed herein. In an embodiment, the focal plain of said laser beam is adjusted by applying an electrical current through the coil of the electromagnetic motor according to the invention.

### DETAILED DESCRIPTION OF THE INVENTION

Before the present method and products of the invention are described, it is to be understood that this invention is not limited to particular methods, components, products or combinations described, as such methods, components, products and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In the following detailed description of the invention, reference is made to the accompanying drawings that form a part hereof, and in which are shown by way of illustration only of specific embodiments in which the invention may be practiced. It is to be understood that other embodiments may be utilised and structural or logical changes may be made without departing from the scope of the present invention. The following detailed description, therefore, is not to be taken in a limiting sense, and the scope of the present invention is defined by the appended claims.

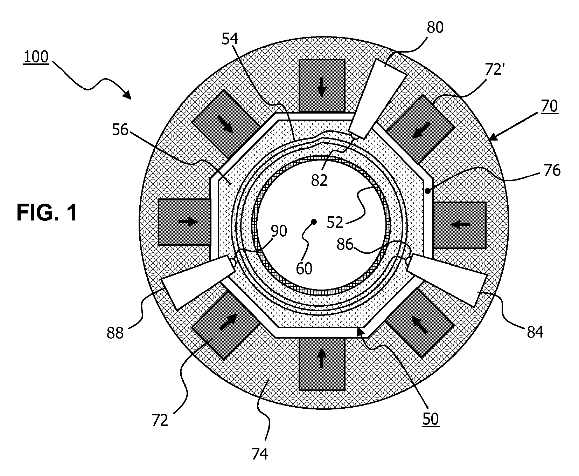

With reference to **FIGs. 1** to **3****,** the present invention relates to an electromagnetic motor **100** for controlled linear displacement of an optical element along an axis of movement (**A-A**') comprising:
- an armature **50** provided with a mounting **52** for the optical element **58**,
- a stator **70** provided with a seat **76** in which the armature **50** lies, which seat **76** is configured to allow linear movement of the armature along the axis (**A-A**'),
wherein
- the armature **50** further comprises a hollow inductive coil **54** through which the mounting **52** for the optical element 58 is disposed,
- the stator **70** is provided with one or more permanent magnets **72, 72'** polarized radially with respect to the axis (**A-A**'), and
- the motor **100** is configured for linear displacement of the armature **50** relative to the stator **70** responsive to an electrical signal provided to the coil **54**.

As used herein, "linear displacement" refers to displacement in one dimension. Linear displacement can refer to unidirectional of bidirectional displacement. According to the invention, an armature comprising an optical element is electromagnetically displaced along an axis which is normal or vertical to the plane of the optical element. Linear displacement refers to an upward and/or downward displacement of the optical element. As used herein, "controlled linear displacement" refers to linear displacement which can be variably adjusted in amplitude (or magnitude) and frequency (or multitude).

Optical elements which can be used according to the invention include all known optical elements which manipulate or modulate electromagnetic waves, such as, without limitation, lenses, mirrors, filters, windows, (de)polarizers, diffractors, prisms, beamsplitters, reflectors, refractors, deflectors and the like. Preferably, the optical element according to the invention is selected from the group consisting of lenses and mirrors; preferably the optical element is a lens. In will be clear to the skilled person that the type of lens, in particular the optical characteristics, can be varied according to the application. According to the invention, one or more optical element, e.g. 1, 2, 3, 4, 5, or more optical elements, can be displaced with the electromagnetic motor as disclosed herein. Preferably, one optical element is mounted in the armature of the electromagnetic motor according to the invention. The optical element according to the invention preferably has a generally planar or flattened appearance, i.e. the dimensions in the XY plane are substantially larger than the dimension in the Z direction. According to a preferred embodiment, the axis of movement of the optical element (A-A') is orthogonal to the XY plane of the optical element.

As used herein, "armature" **50** refers to the displaceable element of the electromagnetic motor on which the optical element is mounted. In a preferred embodiment, the armature **50** is a substantially annular element, preferably substantially planar, *i.e.* a hollow element, whereby the armature comprises a mounting for one or more optical element about the inner armature periphery. The optical element can be mounted or fixed to the armature in the hollow by any means known in the art, such as, without limitation bolts and nuts, clamps, glue and combinations thereof. In a preferred embodiment, the armature and the mounting for the optical element or mounted optical element are coplanar. The armature is preferably composed of light weight rigid material, for instance comprising or consisting of epoxy resin. In a preferred embodiment, the armature comprises printed circuit board (PCB). The outer profile of the armature may be circular or polygonal (e.g. triangular, square, pentagonal, hexagonal, heptagonal, octagonal etc); **FIG. 1** depicts an octagonal outer profile. The profile of the armature hollow **60** may be circular or polygonal (e.g. triangular, square, pentagonal, hexagonal, heptagonal, octagonal etc); **FIG. 1** depicts the armature having a circular hollow **60**.

According to the invention, the armature **50** further comprises an electrically conductive coil **54** (inductor) which shaped to surround the periphery of the mounting **52** for the optical element. The coil **54** according to the invention is a flat, planar coil, which is coplanar with the armature **50**. It may have a circular shape, the inner diameter of which is greater than the outer diameter of a circular mounting for the optical element. In an embodiment, the coil is coplanar with the mounting for the optical element or the mounted optical element itself. In a preferred embodiment, the coil is provided on a PCB 56. The number of turns (windings) of the coil **54** will depend on several factors including the force required, the space available, the permanent magnetic field strength, and on any limits as to electrical current consumption. The number of turns may be 1, 2, 3, 4, 5, 6, 7, 8, 9, 10, 11, 12, 13, 14, 15, 16, 17, 18, 19, 20, 50, 100, 200, 250, 300, 350, 400, 450, 500 or more, or a value in the range between any two of the aforementioned values. The coil ends can be connected to an electric power supply. In an embodiment, the coil is made from electrically conducting wire. The wire may have any suitable transverse profile such as circular, oval, oblong or rounded oblong. Where it is oblong, it may be formed as a strip which contributes the mechanical strength of the armature. Any electrically conductive material is suited according to the invention. In a preferred embodiment the coil comprises, comprises substantially, or consists of copper or aluminum.

As used herein, "stator" refers to the static element of the electromagnetic motor. According to the invention, the stator **70** supports the armature **50**. The stator seat **76** provides a cavity in which the armature lies without substantially contacting the armature walls. In operation, the armature **50** can be displaced relative to the stator **70**. According to the invention, one or more permanent magnets **72**, **72**' are provided on the stator **70**, such as, for instance, 1, 2, 3, 4, 5, 6, 7, 8, 9, 10 or more permanent magnets. The stator **70** may comprise a planar support **74**, such as a PCB disposed with an opening perpendicular to the axis of movement that provides part of the stator seat **76**, around which opening the permanent magnets are mounted. In an embodiment, one permanent magnet is provided on the stator. Where one permanent magnet is provided, it may a hollow, round toroidal magnet. In another embodiment, two permanent magnets are provided on the stator. Preferably, said two magnets are semi-annular or substantially semi-annular magnets. In a further embodiment, three or more permanent magnets **72, 72**' are provided on the stator. In yet another embodiment, eight permanent magnets are provided on the stator, as shown, for instance, in **FIG. 1****.** It will be appreciated by a skilled person that the magnet strength or magnetic dipole moment of the permanent magnet can be varied depending on the desired magnetic field strength or magnetic flux. According to the invention, the one or more permanent magnet is polarized radially with respect to the axis of movement (A-A') and the one or more permanent magnet is disposed on the stator such as to enclose the coil on the armature. Preferably, the permanent magnets are arranged symmetrically or distributed evenly about the armature with respect to the axis of movement A-A'. Preferably, the permanent magnets are equally spaced from each other. The north pole of each permanent magnet may be proximal to the coil and the south pole of each permanent magnet is distal to the coil, or *vice versa.* According to the invention, the one or more permanent magnet **72, 72'** is coplanar with the coil. The coplanar arrangement may exist when the armature is in the neutral position. According to the invention, the one or more permanent magnet **72, 72'** flank the most outward turn of the coil. Preferably, the distance between the one or more permanent magnet and the coil is constant. It will be appreciated by a skilled person that the constant distance can be varied depending on the desired magnetic field interaction strength of the permanent magnets and the coil.

According to the invention, the electromagnetic motor **100** is configured for linear displacement of the armature relative to the stator responsive to an electrical signal provided to the coil. It will be appreciated by a skilled person that the electrical current which can be applied to the coil may be varied, depending on the desired magnetic field strength or magnetic flux.

In an embodiment, the electromagnetic motor **100** according to the invention further comprises at least one, preferably at least two, more preferably at least three, most preferably three compliant members **80**, **84, 88** that provide a force to said armature to bias the armature in a neutral position, and whereby the electrical signal provides a current-induced force that displaces the armature either side of the neutral position along the axis of movement A-A' against the force of the compliant member. The compliant members may be arranged in the same plane. The compliant members may be arranged in a single plane. Alternatively they may be distributed in two planes flanking the planar support 74 in the axis (A-A') of movement, in which case double the number of compliant members 80, 84, 88 is provided, and they are paired *via* a connecting transmission member (see later). The one or more compliant member connects the armature to the stator.

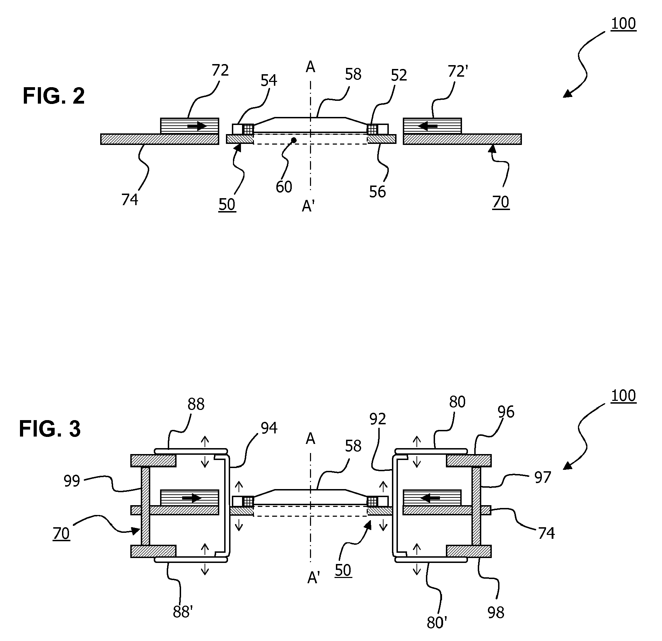

As used herein, "compliant member" 80, 84, 88 refers to a flexible element having a certain rigidity, which can be overcome by the application of external force, in particular resulting from the magnetic field interaction of the permanent magnet and coil. In the absence of external force, the compliant member retains the armature in a predetermined position. Preferably, the compliant members are arranged symmetrically about the armature with respect to the axis of movement A-A'. Preferably, the compliant members **80**, **84**, **88** are equally spaced from each other. Depending on the weight of the armature, as well as the number and/or size of the compliant members, a skilled person is able to determine the required rigidity of the compliant member. In an embodiment, the compliant member is a leaf spring as shown in **FIG. 3**. The compliant member **80, 84, 88** can be fixed to the armature and/or stator by any means known in the art, such as for instance, and without limitation, with nuts and bolts, clamps, glue or combinations thereof.

In a particular embodiment, and with reference for example to **FIG. 3**, the stator **70** comprises the planar support **74** described above flanked on one side by and rigidly attached to a first flanking planar support (FFPS) **96** and on the other side by and rigidly attached to a second flanking planar support (SFPS) **98**. The planes of the planar support **74**, the FFPS **96** and the SFPS **98** are preferably orthogonal to the axis (A-A') of movement. Preferably, the planes of the planar support **74**, the FFPS **96** and the SFPS **98** are parallel to each other. Preferably, the planes of the planar support **74**, the FFPS **96** and the SFPS **98** are parallel along the axis (A-A') of movement.
The FFPS **96** and the SFPS **98** may be attached to the planar support **74** using one or more pins **97, 99**. The FFPS **96** and SFPS **98** may each be provided with an opening which aligns with the seat opening **76** of the planar support **74** in the axis of movement (A-A') The FFPS **96** or SFPS **98** provides an attachment point for a compliant member **80, 84, 88.** A compliant member is attached at one end to a FFPS **96** or SFPS **98**, and at the other end - either directly or indirectly via a transmission member **92, 94** - to the armature **50**. Preferably, a transmission member **92, 94** is rigidly attached to the armature **50** and extends in both directions away from the armature **50** along the axis (**A-A'**) of movement and is connected at each end to one side of a compliant member (**80, 80'; 88, 88'**), the other side of which is mounted on the FFPS **96** or on the SFPS **98**. Each pair of compliant members (**80, 80'; 88, 88'**) is aligned parallel to the axis (**A-A**') of movement. Employing three assemblies each comprising a transmission member **92, 94** a pair of flanking compliant members (**80, 80'; 88, 88'**) provides a mechanism that biases the armature in a neural position, and also restricts displacement of the armature **50** to a single axis of movement.

In an embodiment, at least two of the compliant members - a first **80** and second **84** compliant member - are electrically conductive, and are adapted to provide current to the coil **54** as illustrated, for example, in **FIG. 1**. To this end, the first and second compliant members are connected to any source of electrical signals such as an amplifier. The first **80** of said compliant members is electrically conductively connected **82** to one coil end and the second **84** of said compliant members is electrically conductively connected **86** to the other coil end, optionally via the aforementioned transmission member **92, 94.**

In an embodiment, the electromagnetic motor according to the invention further comprises an electronic amplifier, preferably a class D amplifier, the output of which is connected to the coil. Preferably, the class D amplifier is an H-bridge class D amplifier. Class D amplifiers in general and H-bridge class D amplifiers are well known in the art. In an embodiment, the output of the amplifier is electrically connected to the coil via compliant members. The amplifier is powered by an electric power supply. The power supply can be either a direct current power supply or an alternating current power supply; the later is converted to direct current before transmission to the amplifier. The application of an electrical signal to the coil causes the armature to displace relative to the stator along the axis of movement A-A', whereby the direction of the displacement, i.e. upwards or downwards relative to the stator, is determined by the polarity of the electrical signal. Reversing the polarity of the electrical signal reverses the direction of the displacement of the armature, relative to the stator. The amount of current which is applied through the coil determines the magnitude or amplitude of the displacement.

In an embodiment, the electromagnetic motor according to the invention further comprises at least one position sensor configured to measure the displacement of the armature relative to the stator. In a preferred embodiment, the number of position sensors is two, which are preferably diametrically opposed relative to the axis of movement A-A'.

As used herein, "position sensor" refers to a means to measure instantaneously the position of the armature relative to the stator, as well as the amplitude and frequency of the displacement of the armature relative to the stator. In an embodiment, the position sensor comprises a light source and a light detector, which may be mounted on the stator. In between the light source and the detector, a shield comprising an aperture is mounted on the armature, parallel to the axis of movement A-A'. The detector detects the light from the light source through the aperture of the shield. In an embodiment, the light source is a light emitting diode (LED). The relative position of the aperture to the detector is equivalent to the relative position of the armature to the stator. Displacement of the armature relative to the stator along the axis of movement A-A' translates in an equivalent displacement of the incoming light on the detector through displacement of the shield and hence the aperture. The detector can be coupled to a regulator which integrates the difference between the instantaneous and the desired armature position along the axis of movement A-A'. A feedback mechanism can translate this difference to control and variably adjust the electric signal provided to the coil. In an embodiment, the light source of the position sensor is attached to the armature, and connected at one end to one of the electrically conductive compliant members, and at the other end to a bridging connection between the output of an H-bridge amplifier driving the coil. It will be clear to the skilled person that other types of position sensors, or displacement sensors, can be used and fall within the scope of the present invention.

Another aspect of the present invention relates to a method for adjusting the focal plane of an electromagnetic wave beam, preferably a light beam, more preferably a laser beam, comprising transmitting the beam through a lens which is provided in the electromagnetic motor as described herein. In an embodiment, the focal plain is adjusted by applying an electrical current through the coil. Dynamically regulating the displacement of the armature, comprising the lens, along the axis of movement A-A' allows for an equivalent dynamic displacement of the focal plain of the beam along the axis of movement A-A'.

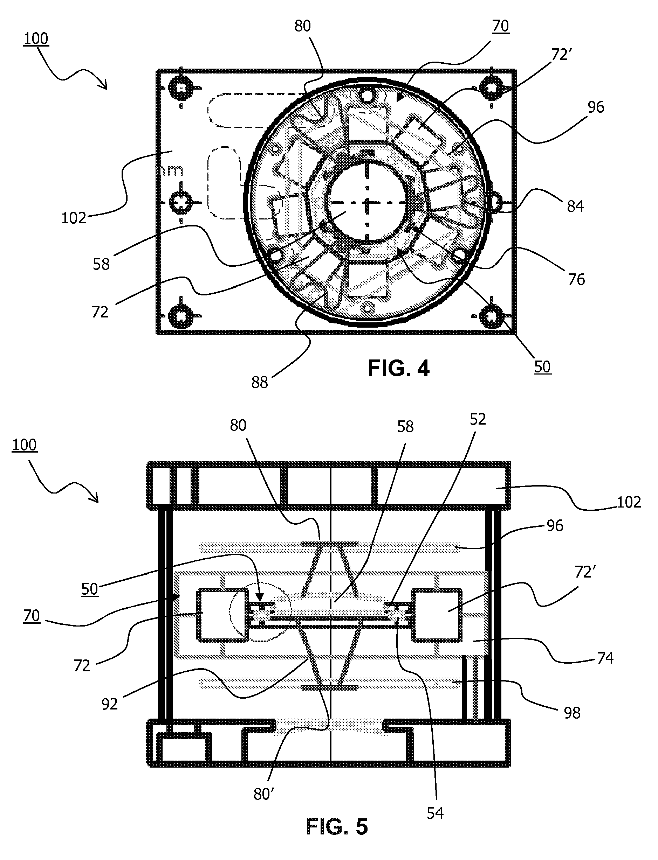

A preferred embodiment of the electromagnetic motor according to the invention will now be described with reference to **FIGs. 4** and **5****.** In **FIG. 4**, the electromagnetic motor **100** comprises a stator in which the planar support **74** is provided with eight permanent magnets arranged radially polarized around an opening that forms part of the armature **50** seat. A first flanking planar support (FFPS) **96**, parallel to the planar support **74**, holds three compliant members **80, 84, 88** spatially separated around the periphery of the armature **50** seat **76**. Referring to **FIG. 5** which depicts the motor **100** in cross-section, an optical element **58** is held in the mounting **52**, the periphery of which is disposed with the coil **54**. A second flanking planar support (SFPS) **98**, parallel to the planar support **74**, holds another three compliant members, one **80** of which is shown connected by a transmission member **92** a corresponding compliant member in the FFPS **96**. The stator **70** is supported within a rigid housing **102**.

## Claims

1. An electromagnetic motor (100) for controlled linear displacement of an optical element (58) along an axis of movement (A-A') comprising:
- an armature (50) provided with a mounting (52) for the optical element (58), and
- a stator (70) provided with a seat (76) in which the armature (50) lies, which seat (76) is configured for linear movement of the armature (50) along the axis (A-A'),
wherein
- the armature (50) further comprises a hollow inductive coil (54) through which hollow the mounting (52) for the optical element is disposed,
- the stator (70) is provided with one or more permanent magnets (72, 72') polarized radially with respect to the axis (A-A'), and
- the motor (100) is configured for linear displacement of the armature (50) relative to the stator (70) responsive to an electrical signal provided to the coil (54).

2. Electromagnetic motor (100) according to claim 1, further comprising a class D amplifier, the output of which is connected to the coil (54).

3. Electromagnetic motor (100) according to claim 2, wherein said class D amplifier is an H-bridged class D amplifier.

4. Electromagnetic motor (100) according to any of claims 1 to 3, further comprising at least three compliant members (80, 84, 88) that provide a force to said armature (50) to bias the armature in a neutral position, and whereby the electrical signal provides a current-induced force that displaces the armature (50) either side of the neutral position against the force of the compliant members.

5. Electromagnetic motor (100) according to claim 4, wherein at least two of the compliant members - a first and second compliant member (80, 84) - are electrically conductive and electrically conductively isolated from each other, and adapted to provide current to the coil (54).

6. Electromagnetic motor (100) according to any of claims 1 to 5, wherein the linear displacement of the mounting (52) is restricted to said axis (A-'A).

7. Electromagnetic motor (100) according to any of claims 1 to 6, wherein the coil (54) is made from conducting wire or strips.

8. Electromagnetic motor (100) according to any of claims 1 to 7, further comprising at least one position sensor configured to measure the displacement of the armature relative to the stator.

9. Electromagnetic motor (100) according to claim 8, wherein the number of position sensors is two, and they are diametrically opposed relative to the axis of movement.

10. Electromagnetic motor (100) according to any of claim 1 to 9, wherein
- the limitation of claims 3 and 5 are present,
- at least one further - a third - compliant member (88) is electrically conductive, and electrically conductively isolated from the first (80) and second (84) compliant members,
- a light source forming part of a position sensor is mounted on the armature (50),
- current is provided to the light source through
- the third compliant member (88), and
- a bridging connection between the first (80) and second (84) compliant members.

11. Electromagnetic motor (100) according to any of claims 1 to 10, wherein the permanent magnet (72, 72') is a single closed annular permanent magnet.

12. Electromagnetic motor (100) according to any of claims 1 to 10, wherein there are two or more permanent magnets (72, 72') which evenly distributed around the axis of movement.

13. Electromagnetic motor (100) according to any of claims 1 to 12, where in the one or more magnets (72, 72') are arranged in a plane that is co-planar with the plane of the coil (54).

14. Electromagnetic motor (100) according to any of claims 1 to 13, wherein said optical element is a lens.

15. A method for adjusting the focal plane of a laser beam, comprising transmitting said laser beam through said lens of the electromagnetic motor (100) according to claim 14.

16. The method according to claim 15, wherein said focal plain is adjusted by applying an electrical current through said coil (54).
